# EUROPÄISCHE PATENTANMELDUNG

(11) **EP 0 987 463 A1**
(43) Veröffentlichungstag der Anmeldung: **22.03.2000**
(21) Anmeldenummer: 98117418.8
(22) Anmeldetag: 15.09.1998
(51) Int. Cl.: F16D 69/02

(54) **Gesinterter Bremsbelag und Verfahren zum Herstellen eines solchen**

(71) Anmelder: DaimlerChrysler AG, 70567 Stuttgart (DE)
(72) Erfinder: Gross, Gerhard, 73560 Böbingen (DE); Haug, Tilmann Dr., 88690 Uhldingen-Mühlhofen (DE)

(57) **Zusammenfassung**

Es wird ein Verfahren zum Herstellen eines Reibkörpers angegeben, der insbesondere als Reibbelag für einen Bremskörper aus faserverstärkter Keramik geeignet ist. Zur Herstellung wird zunächst eine Mischung zumindest aus Kohlenstoffpartikeln und aus Metallpartikeln, ggf. unter Zusatz von zur Pyrolyse geeigneten polymeren Bindemitteln, von Hartstoffpartikeln, wie Siliziumcarbid oder Titancarbid als Reibstützer, und von festen Schmiermitteln, wie Molybdänsulfid oder Graphit, hergestellt und anschließend, zu Grünlingen kalt verpreßt. Danach erfolgt eine Sinterung unter Vakuum oder Schutzgasatmosphäre, wobei die organischen Binderanteile zunächst pyrolisiert werden und die Metallpartikel zumindest teilweise mit Kohlenstoff reaktionsgebunden werden. Die so hergestellten Reibbeläge weisen eine hohe mechanische Festigkeit, gute Reibeigenschaften, eine hohe thermische Belastbarkeit und ein gutes Verschleißverhalten auf.

## Beschreibung

Die Erfindung betrifft einen gesinterten Bremsbelag, der mit einem Bremskörper aus faserverstärkter Keramik tribologisch zusammenarbeitet, sowie ein Verfahren zum Herstellen eines solchen.

Bremsbeläge mit organisch gebundener Matrix sind seit Jahrzehnten im Automobilbau im Zusammenhang mit Scheibenbremssystemen bekannt. Sie werden meist zusammen mit Bremsscheiben auf Grauguß-Basis verwendet. In jüngster Zeit werden auch anorganisch gebundene Bremsbeläge auf der Basis von Metallpulvern verwendet, die insbesondere bei hochbelasteten Scheibenbremssystemen in Schienenfahrzeugen eingesetzt werden. Sie bestehen aus einer stählernen Trägerplatte, auf der säulenförmige Reibelemente, ggf. unter Verwendung federnder Elemente, aufgesetzt sind. Die Reibelemente können mit einer metallischen Teilumhüllung versehen sein, bei der zumindest die äußere Reibfläche unbedeckt bleibt. Die Reibmasse besteht häufig aus Eisen, dem Kupfer und ggf. dessen Legierungskomponenten, wie Zinn oder Zink, zugesetzt werden können. Die Reibmasse kann außerdem feste Schmierstoffe, wie Graphit, Molybdän, Disulfid oder Blei sowie Hartstoffe als Reibstützer, wie etwa Chromcarbid, Ferrochrom und Titancarbid oder Keramikpartikel aus Metalloxiden, zum Beispiel SiO2 enthalten. Diese Reibmassen werden kalt zu Grünlingen gepreßt, die in der Regel unter Druck zu Reibelementen gesintert werden. Es ist auch vorgeschlagen worden, den Sinterprozeß drucklos durchzuführen und die Elemente ggf. anschließend nachzuverdichten.

Daneben ist es ans der DE 43 06 721 A1 bekannt, ungesinterte Bremsbeläge durch Befestigen von säulenförmigen Reibelementen aus nicht-organisch gebundenem Reibmaterial auf der Basis von Metallpulver auf einer stählernen Trägerplatte herzustellen, wobei die Reibmasse aus 30 bis 50 Vol.-% Eisen, 5 bis 45 Vol.-% Kohlenstoff, 20 bis 45 Vol.-% Kupfer und/oder Kupferverbindungen, 0 bis 10 Vol.-% Hartstoffpartikeln und 0 bis 10 Vol.-% festen Schmiermitteln besteht, die in einer-Form zu Reibelementen kalt gepreßt wird und nach Erwärmen bis auf eine Temperatur unterhalb der Sintertemperatur mit der Trägerplatte verbunden werden, indem zumindest die Mantelfläche der Reibelemente mit Kupfer oder einer Kupferlegierung umhüllt werden.

Derartige Bremsbeläge wurden speziell zur Verwendung mit metallischen Bremskörpern, insbesondere Bremsscheiben, meist aus Grauguß oder Stahl entwickelt. Eine gute Reibpaarung und ein stetiges Bremsverhalten ist nur im Zusammenhang mit derartigen metallischen Bremskörpern gewährleistet.

Darüber hinaus ist die thermische Belastbarkeit insbesondere bei dem Bremsbelag gemäß der DE 43 06 721 A1 durch die thermische Beständigkeit der metallischen Kupferummantelung begrenzt.

Aus Schatt, Werner: Pulvermetallurgie, Sinter- und Verbundwerkstoffe, 3. Auflage, 1988, Dr. Alfred Hüthig Verlag, Heidelberg, ISBN 3-7785-1624-8, Seiten 199, 345 bis 364, ist die Herstellung von gesinterten Reibwerkstoffen und von gesinterten Bremsbelägen grundsätzlich bekannt. Danach kann eine Mischung aus Kohlenstoffpartikeln und ans Metallpartikeln und ggf. anderen Zusatzstoffen hergestellt werden, die Mischung in einer Form gepreßt werden und anschließend gesintert werden. Der Kohlenstoff kann hierbei in Pulverform, etwa aus Graphit zugesetzt werden. Während des Sintervorganges treten die nach dem Eisen-Kohlenstoff-Zustandsschaubild zu erwartenden Reaktionen auf, so daß eine Reaktionsbindung mit Kohlenstoff auftritt.

Darüber hinaus ist durch die EP 0 144 464 A1 ein Bremsbelag bekennt geworden, bei dem sinterbare Metallpartikel, kohlenstoffhaltiges Material und aushärtbares Polymerharz gemischt werden, die Mischung in eine Form gebracht wird und das Harz ausgehärtet wird, um die Mischung in einen vorgeformten Zustand zu bringen, woraufhin ein Aufheizen zur Carbonisierung des Harzes und zum Sintern der Metallpartikel zu einer Sintermetallmatrix erfolgt. Dabei können zusätzlich noch Hartstoffpartikel zugegeben werden.

Den vorstehend erwähnten Bremsbelägen ist gemeinsam, daß diese für eine Reibpaarung mit herkömmlichen Grauguß-Scheiben oder Stahlscheiben ausgelegt sind.

In jüngster Zeit werden bei Hochleistungsbremssystemen CVC-Bremsscheiben eingesetzt, die sich wegen des hohen Preises und des hohen Verschleißes jedoch bisher nur im automobilen Rennsport durchsetzen konnten. Neuere Entwicklungen zielen auf kohlefaserverstärkte Siliziumcarbide, wie etwa C/SiC oder auf eiliziumcarbidfaserverstärkte Siliziumcarbide SiC/SiC ab. Aufgrund einer Verstärkung der Keramik mit hochfesten Fasern, wie etwa Kohlenstoffasern, erhält man eine schadenstolerante Keramik, die quasi duktil bricht. Derartige Werkstoffe sind besonders abriebbeständig und extrem hoch thermisch belastbar.

Für solche Bremskörper aus faserverstärkter Keramik wurde bislang noch kein geeigneter Bremsbelag entwickelt, der den hohen Anforderungen einer derartigen Reibpaarung von hoher thermischer Belastbarkeit und geringem Abrieb bei ausreichend hohem Reibbeiwert standhält. Konventionelle Bremsbeläge, insbesondere solche mit organischer Bindung stofflich unterschiedlicher Partikel zu eines Verbundwerkstoff, zeigen bei einer Reibpaarung mit Keramik-Bremskörpern ein schlechtes Bremsverhalten, einen hohen Verschleiß und sind auch für einen solchen Einsatz nicht ausreichend temperaturbeständig.

Die Aufgabe der Erfindung besteht demnach darin, einen Bremsbelag und ein Verfahren zur Herstellung eines solchen zu schaffen, der tribologisch mit einem Bremskörper aus faserverstärkter Keramik zusammenarbeitet und eine hohe Festigkeit, gute Reibeigenschaften, sowie eine hohe thermische Belastbarkeit bei geringem Verschleiß aufweist.

Diese Aufgabe wird durch einen gesinterten Bremsbelag gelöst, der Kohlenstoff und zumindest teilweise mit dem Kohlenstoff reaktionsgebundene Metallpartikel, ferner Hartstoffpartikel sowie pyrolysierte Polymere als Bindemittel enthält, wobei diese aus-Polysiloxanen, Polycarbosilanen und/oder Kohlenstoffharzen stammen.

Diese Aufgabe wird ferner durch ein Verfahren zum Herstellen eines mit einem Bremskörper aus faserverstärkter Keramik tribologisch zusammenarbeitenden Bremsbelages gelöst, bei dem eine Mischung aus Kohlenstoffpartikeln, Metallpartikeln, Hartstoffpartikeln und pyrolysierbaren Polymeren, enthaltend Polysiloxan und/oder Polycarbosilan, als Bindemittel in eine Form gepreßt und unter Vakuum oder Schutzgas gesintert wird, bis die Metallpartikel zumindest teilweise mit Kohlenstoff reaktionsgebunden sind.

Erfindungsgemäß wurde erkannt, daß eine Reaktionsbindung der in der Matrix eingelagerten Metallpartikel durch eine Carbidisierung zumindest an der Oberfläche erforderlich ist, um die gewünschten Eigenschaften des Bremsbelages zu erreichen. Die eingelagerten Metallpartikel werden so an der Matrix ausreichend sicher gebunden, so daß ein Herausreißen von Metallpartikeln aus der Matrix und somit ein zusätzlicher abrasiver Verschleiß vermieden wird. Gleichzeitig wird durch die zumindest teilweise Carbidisierung der Metallpartikel an der Oberfläche die Temperaturbelastbarkeit und die Verschleißbeständigkeit des Bremsbelages erheblich vergrößert. Durch den Kohlenstoffanteil ergibt sich in Verbindung mit den teilweise carbidisierten eingelagerten Metallpartikeln eine deutlich verbesserte Reibpaarung bei Verwendung mit Bremskörpern aus faserverstärkter Keramik.

Erfindungsgemäß wurde ferner erkannt, daß sich derartige Reibkörper durch Sintern einer formgepreßten Mischung zumindest aus Kohlenstoffpartikeln und Metallpartikeln unter Vakuum oder Schutzgasatmosphäre herstellen lassen, wobei die Sinterparameter derart gewählt werden, daß die Metallpartikel während des Sinterprozesses zumindest teilweise mit Kohlenstoff reaktionsgebunden werden.

Erfindungsgemäß werden der Mischung zur Pyrolyse geeignete Polymere, vorzugsweise zumindest Pech, Polysiloxan oder Polycarbosilan, als Bindemittel zugesetzt.

Durch einen derartigen Zusatz von organischen Bindemitteln lassen sich beim Kaltpressen der Mischung Grünlinge mit ausreichender Festigkeit herstellen. Da die organischen Bindeanteile beim anschließenden Sinterprozeß zu sekundärem Kohlenstoff, SiOC und/oder SiC pyrolisieren, wird hierdurch der Matrixverbund noch verbessert und die Reaktionsbindung der eingelagerten Metallpartikel unterstützt, da der pyrolytisch gebildete Kohlenstoff erheblich reaktionsfreudiger als der primär eingelagerte Kohlenstoff ist.

In vorteilhafter Weiterbildung der Erfindung werden die Kohlenstoffpartikel in Pulverform zugesetzt, wobei vorzugsweise Kokspulver und ggf. Graphitpulver bevorzugt ist.

In zusätzlicher Weiterbildung der Erfindung werden die Metallpartikel in Pulverform verwendet, wobei Eisen, Stahl, Grauguß, Bronze, Messing, Silizium, Ferrosilizium und/oder Kupfer bevorzugt sind.

Je nach dem verwendeten Bremskörper als Reibpartner sind hierbei verschiedene der erwähnten Metalle oder auch Kombinationen hiervon in geeigneten Mischungsverhältnissen bevorzugt.

In zusätzlicher Weiterbildung der Erfindung werden der Mischung Hartstoffpartikel, vorzugsweise in Pulverform, zugesetzt, wobei insbesondere Siliziumcarbid und/oder Titancarbid bevorzugt sind. Darüber hinaus sind jedoch auch Borcarbid, Aluminiumoxid oder Glas geeignet.

Durch den Zusatz derartiger Hartstoffpartikel mit einem Gewichtsanteil von bis zu 20 Gew.-%, vorzugsweise bis zu 10 Gew.-%, läßt sich der Äbrieb des Reibkörpers verringern bzw. die Verschleißfestigkeit deutlich steigern.

Gemäß einer weiteren vorteilhaften Ausgestaltung der Erfindung werden der Mischung feste Schmiermittel, vorzugsweise Molybdänsulfid und/oder Graphit zugesetzt.

Durch diese Maßnahme wird eine Konstanz der Reibbeiwerte über weite Temperaturbereiche unterstützt und gleichzeitig der Verschleiß reduziert. Hierbei haben sich Schmiermittelzusätze von bis zu 30 Gew.-%, vorzugsweise bis zu 15 Gew.-%, als vorteilhaft erwiesen.

Die verwendete Mischung besteht vorzugsweise aus 20 bis 70 Gew.-% Kohlenstoff in primärer oder pyrolytisch gebildeter Form, 10 - 60 Gew. -% Metallpartikeln, die zumindest teilweise mit Kohlenstoff reaktionsgebunden sind, bis zu 20 Gew. -% Hartstoffpartikeln und bis zu 20 Gew. -% festen Schmiermitteln.

Beim Kaltpressen haben sich Preßdrücke von etwa 500 bis 2000 bar als vorteilhaft erwiesen, um Grünlinge mit ausreichender Festigkeit herzustellen.

Soweit Bindemittel wie zum Beispiel, Pech, Polysiloxan oder Polycarbosilan zugesetzt werden, kann der Preßdruck reduziert werden, vorzugsweise auf etwa 50 bar.

Die anschließende Sinterung wird vorzugsweise in einem Temperaturbereich von etwa 800 bis 1400 °C durchgeführt, wobei sich eine Temperatur von etwa 1000 °C bis 1200 °C als besonders vorteilhaft erwiesen hat.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein lichtmikroskopisches Gefügebild eines erfindungsgemäßen Reibbelages, der aus 30 Gew.-% Stahlpulver, 2 Gew.-% Naturgraphit, 5 Gew.-% Pech und 63 Gew.-% Koks hergestellt wurde, und
- Fig. 2a, b: Ergebnisse eines Bremsversuches mit einem Bremsbelag mit einer Fläche von 86 x 60 mm gemäß Fig. 1, der auf einem Bremsenprüfstand mit einer Bremsscheibe aus kurzfaserverstärkter Keramik (C/C-SiC) mit einem Durchmesser von 280 mm getestet wurde, wobei in Fig. 2a der Verlauf des Reibbeiwertes dargestellt ist und in Fig. 2b die Temperatur der Bremsscheibe in der Scheibenmitte.

Zur Herstellung der erfindungsgemäßen Reibkörper wird eine Mischung aus Kohlenstoffpulver (vorzugsweise Koks), aus einem zur Pyrolyse geeigneten Polymer (vorzugsweise Pech, Polysiloxan und Polycarbosilan) als Binder aus Metallpulver, vorzugsweise Eisen, aus Hartstoffpulver als Reibstütze (vorzugsweise TiC und/oder SiC) und aus festen Schmierstoffen (vorzugsweise MoS2) kalt mit einem Druck von 500 bis 2000 bar verpreßt. Die so erhaltenen Grünlinge werden anschließend bei Temperaturen von 800 bis 1200 °C, vorzugsweise von etwa 1000 °C, unter Schutzgas gesintert, wobei die organischen Bindemittel zunächst pyrolisiert werden. Pech wird dabei zu sekundärem Kohlenstoff pyrolisiert, Polysiloxan pyrolisiert zu Si-O-C und Polycarbosilan zu SiC (C,O). Während des Sinterprozesses reagieren die Metallpulver je nach Sinterbedingungen und Partikelgröße vollständig oder teilweise zu den entsprechenden Karbiden.

Es werden Sinterkörper mit einer Biegefestigkeit von mindestens 30 MPa und einer Härte von HV 800 bis 1200 erhalten. Diese Körper sind in ihrer Härte und Festigkeit dem Bremskörperwerkstoff "kurzfaserstärkte Keramik" angepaßt. Durch einen hohen Anteil an Kohlenstoff und Keramik aus den Reibstützen und den karbidisierten Metallpulvern können wesentlich höhere Temperaturen als bei konventionellen Bremsbelägen zugelassen werden. Der hohe Kohlenstoffanteil ermöglicht die Einbettung von harten Partikeln, stammend aus der Umgebung oder aus den Reibpartnern, so daß diese keinen weiteren abrasiven Verschleiß hervorrufen.

### Beispiel 1

Ein Gemisch aus 30 Gew.-% Stahlpulver, 2 Gew.-% Naturgraphit, 5 Gew.-% Pech und 63 Gew.-% Kokspulver wurde bei 1500 bar kalt verpreßt und anschließend bei 1000 °C unter Argonatmosphäre gesintert.

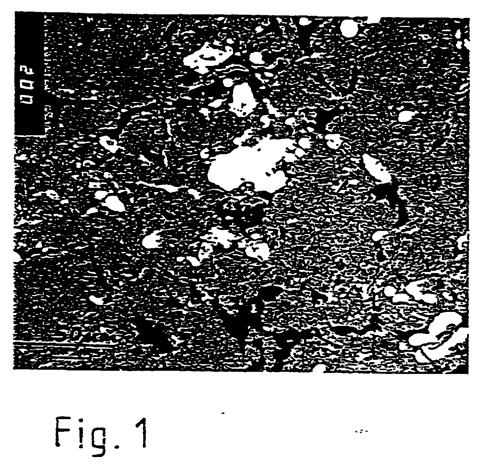

Fig. 1 zeigt ein Gefüge des fertigen Körpers im lichtmikroskopischen Schliffbild. Die bellen Gefügeanteile sind in der Kohlenstoffmatrix eingelagerte Stahlpartikel, während die Kohlenstoffmatrix grau erscheint. Bei den schwarzen Gefügeanteilen handelt es sich um Restporosität, teilweise auch um pyrolytisch gebildeten sekundären Kohlenstoff.

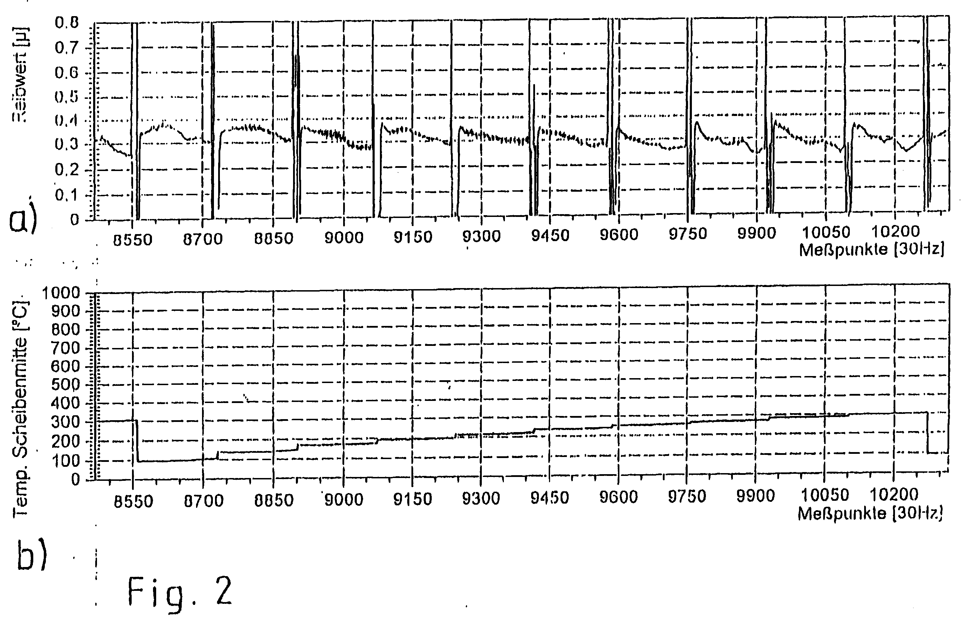

Aus den Körpern wurden zwei Bremsbeläge mit einer Fläche von 86 x 60 mm mechanisch herausgearbeitet und auf einem Bremsenprüfstand mit einer Bremsscheibe aus kurzfaserverstärkter Keramik (C/C-SiC) mit einem Durchmesser von 280 mm getestet. Der-Reibbeiwert lag gemäß Fig. 2a zwischen 0,28 und 0,4. Der Verschleiß wurde bei einem Bremsdruck von 20 bar mit 0,7 g gemessen.

### Beispiel 2

Gegenüber Beispiel 1 wurde der Gehalt des Stahlpulvers auf 50 Gew.-% erhöht. Ansonsten wurden die gleichen Versuchsbedingungen wie bei Beispiel 1 verwendet. Der gemessene Reibwert lag zwischen 0,20 und 0,45. Der Verschleiß bei einem Anpreßdruck von 20 bar betrug 1 g. Das Reibverhalten entspricht somit etwa Beispiel 1.

### Beispiel 3

Der Gehalt des Stahlpulvers wurde auf 10 Gew.-% reduziert. Ansonsten wurden die gleichen Versuchsbedingungen wie bei Beispiel 1 verwendet. Der gemessene Reibwert lag mit 0,15 bis 0,28 deutlich niedriger, der gemessene Verschleiß bei einem Druck von 20 bar betrug 1,4 g und war damit etwa doppelt so hoch wie bei Beispiel 1.

### Beispiel 4

Es wurde ein herkömmlicher C/C-Bremsbelag der Firma HITCO analog den Bedingungen von Beispiel 1 getestet. Der gemessene Reibwert lag mit 0,2 bis 0,25 sehr niedrig und der Verschleiß bei 20 bar mit 7,7 g sehr hoch. Dieser herkömmliche Bremsbelag ist damit zu weich.

### Beispiel 5

Es wurde ein Bremsbelag aus dem Material der Bremsscheibe analog den Bedingungen aus Beispiel 1 getestet. Der Reibwert lag mit 0,4 bis 0,6 hoch, der gemessene Verschleiß war mit 7,2 g sehr hoch. Mit einen derartigen "harten Belag" ist offensichtlich keine ausreichende Einbettfähigkeit von harten Partikeln mehr möglich. Demzufolge tritt ein starker abrasiver Verschleiß auf.

### Beispiel 6

Es wurde ein herkömmlicher organisch gebundener Serienbelag anlog den Bedingungen von Beispiel 1 getestet. Der Reibwert war mit 0,15 bis 0,35 niedrig, und der Verschleiß lag mit 30,4 g extrem hoch.

### Beispiel 7

Eine herkömmliche Grauguß-Bremsscheibe von Daimler-Benz wurde mit dem Original-Serienbelag gemäß Beispiel 6 analog den Testbedingungen aus Beispiel 1 getestet. Der Verschleiß der Bremsbeläge wurde mit 5,0 g ermittelt und ist damit etwa fünfmal so groß wie der aus Beispiel 1 und 2.

Die Beispiele zeigen, daß mit dem erfindungsgemäßen Bremsbelag der Verschleißwiderstand gegenüber herkömmlichen Serienbremsbelägen deutlich verbessert wurde. Ferner zeigt sich, daß der erfindungsgemäße Bremsbelag in Verbindung mit einer Bremsscheibe aus faserverstärkter Keramik einen besseren Reibbeiwert und ein um ein Mehrfaches verbessertes Verschleißverhalten aufweist, als sich bei einem organisch gebundenen Bremsbelag in Verbindung mit einer Graugußbremsscheibe ergibt.

## Patentansprüche

1. Gesinterter, mit einem Bremskörper aus faserverstärkter Keramik tribologisch zusammenarbeitender Bremsbelag, der Kohlenstoff und zumindest teilweise mit dem Kohlenstoff reaktionsgebundene Metallpartikel, ferner Hartstoffpartikel sowie pyrolysierte Polymere als Bindemittel enthält, wobei diese aus Polysiloxanen, Polycarbosilanen und/oder Pech stammen.

2. Bremsbelag nach Anspruch 1, dadurch gekennzeichnet, daß als Metallpartikel Eisen, Stahl, Grauguß, Silizium, Ferrosilizium, Bronze, Messing oder Kupfer enthalten sind.

3. Bremsbelag nach Anspruch 1 oder 2, dadurch gekennzeichnet, daß als Hartstoffpartikel Metallcarbide der eingemischten Metallpartikel enthalten sind.

4. Bremsbelag nach Anspruch 1, 2 oder 3, dadurch gekennzeichnet, daß als Hartstoffpartikel Siliziumcarbid, Titancarbid, Borcarbid, Aluminiumoxid oder Glas enthalten sind.

5. Bremsbelag nach einen der Ansprüche 1 bis 4, dadurch gekennzeichnet, daß Partikel von festen Schmierstoffen enthalten sind.

6. Bremsbelag nach Anspruch 5, dadurch gekennzeichnet, daß als feste Schmierstoffe Molybdändisulfid oder Graphit enthalten sind.

7. Bremsbelag nach einem der Ansprüche 1 bis 6, dadurch gekennzeichnet, daß er 20 bis 70 Gew.-% Kohlenstoff in primärer oder pyrolytisch gebildeter Form, 10 bis 60 Gew.-% an zumindest teilweise mit Kohlenstoff reaktionsgebundenen Metallpartikeln, bis zu 20 Gew.-% Hartstoffpartikel und bis zu 20 Gew.-% feste Schmierstoffe enthält.

8. Verfahren zum Herstellen eines mit einem Bremskörper aus faserverstärkter Keramik tribologisch zusammenarbeitenden Bremsbelagas, bei dem eine Mischung aus Kohlenstoffpartikeln, Metallpartikeln, Hartstoffpartikeln und pyrolysierbaren Polymeren - enthaltend Polysiloxan, Polycarbosilan und/oder Pech - als Bindemittel in eine Form gepreßt und unter Vakuum oder Schutzgas gesintert wird, bis die Metallpartikel zumindest teilweise mit Kohlenstoff reaktionsgebunden sind.

9. Verfahren nach Anspruch 8, dadurch gekennzeichnet, daß Kohlenstoffpartikel in Pulverform zumindest aus Koks oder Graphit verwendet werden.

10. Verfahren nach Anspruch 8 oder 9, dadurch gekennzeichnet, daß Metallpartikel in Pulverform zugemischt werden, die zumindest Eisen, Stahl, Grauguß, Silizium, Ferrosilizium, Bronze, Messing oder Kupfer enthalten.

11. Verfahren nach Anspruch 8, 9 oder 10, dadurch gekennzeichnet, daß als Hartstoffpartikel Siliziumcarbid, Titancarbid, Borcarbid, Aluminiumoxid oder Glas zugemischt werden.

12. Verfahren nach einem der Ansprüche 8 bis 11, dadurch gekennzeichnet, daß der Mischung auch feste Schmiermittel in Pulverform zugemischt werden, und zwar vorzugsweise Molybdändisulfid oder Graphit.

13. Verfahren nach einem der Ansprüche 8 bis 12, dadurch gekennzeichnet, daß die Mischung aus 20 bis 70 Gew.-% Kohlenstoff in primärer oder pyrolytisch gebildeter Form, 10 bis 60 Gew.- an zumindest teilweise mit Kohlenstoff reaktionsgebundenen Metallpartikeln, bis zu 20 Gew.-% Hartstoffpartikel und bis zu 20 Gew.-% feste Schmierstoffe hergestellt wird.

14. Verfahren nach einem der Ansprüche 8 bis 13, dadurch gekennzeichnet, daß die Mischung unter einem Preßdruck von etwa 500 bis 2000 bar kalt gepreßt wird.

15. Verfahren nach einem der Ansprüche 8 bis 13, dadurch gekennzeichnet, daß eine bindemittelhaltige Mischung unter einem Preßdruck von etwa 50 bar gepreßt wird.

16. Verfahren nach einem der Ansprüche 8 bis 15, dadurch gekennzeichnet, daß die Mischung bei einer Temperatur von etwa 800 bis 1200 °C gesintert wird.
